# EUROPEAN PATENT SPECIFICATION

(11) **EP 2 854 253 B1**
(45) Date of publication and mention of the grant of the patent: **21.09.2016**
(21) Application number: 14180277.7
(22) Date of filing: 07.08.2014
(51) Int. Cl.: H02J 7/00, H01R 13/70, H02J 1/00, H02J 7/04

(54) **Charger, charging terminal, charging system and control method for charging**
Ladegerät, Ladeendgerät, Ladesystem und Steuerverfahren zum Laden
Chargeur, borne de charge, système de charge et procédé de commande destiné au chargement

(30) Priority: 30.09.2013 CN 201310462373
(43) Date of publication of application: 01.04.2015
(73) Proprietor: Xiaomi Inc., Beijing 100085 (CN)
(72) Inventor: Sun, Wei, Haidian District, (CN); Cui, Hongtu, Haidian District (CN); Zhang, Guoquan, Haidian District (CN); Yu, Ji, Haidian District (CN)
(74) Representative: Hanna, Peter William Derek

(56) References cited:
- US-A1- 2010 181 840
- US-A1- 2013 019 113
- US-A1- 2013 099 745

## Description

### TECHNICAL FIELD

The present disclosure generally relates to a technology field of terminal charging, and more particularly, to a charger, a charging terminal, a charging system and a control method for charging.

### BACKGROUND

An output voltage for a charger specified by national standards is 5 ± 5%V and 4.74V-5.25V. A Universal Serial Bus (USB) wire for connecting a mobile phone to a charger itself has a resistance of, usually 0.2Ω for an excellent USB wire, and 0.3-0.4Ω for an ordinary one. Thus, in a case that a charging current is 1A, a voltage drop across a USB wire will be more than or equal to 0.2V. In view that there is another about 0.1V of voltage drop on a PCB, an input voltage for a charging management chip of a mobile phone will be less than 4.7V. That is, the voltage actually output from the charger to the charging management chip of the mobile phone does not meet the standard specified by the international standard.

Generally, under a charging management with an efficiency of 99%, a 4.2V battery of a mobile phone may be charged to 4.2V in a fast charging phase (1A of a charging current), however, for a 4.35V high voltage battery, it cannot be charged to 4.35V in the fast charging phase because the input voltage for the charging management chip cannot reach about 4.85V.

The state of the art is represented by US 2103/099745A, US 2013/019113Aand US 2010/181840A.

### SUMMARY

A charger, a charging terminal, a charging system and a control method for charging are provided in accordance with claims which follow. Embodiments of the present disclosure, which are configured to eliminate the voltage drop across a USB wire between the terminal and the charger, are provided such that a charging voltage of 5 ± 5%V may be obtained at the voltage input port of the charging management chip of the terminal.

In one aspect, a charger is provided by the present disclosure, which includes: a power supply device, a first charging port, a first charging control device and a first switch device, wherein
the power supply device is configured to output a DC charging current by rectifying and voltage-reducing an input AC charging current; the power supply device includes at least a voltage output port and a feedback receiving port; the voltage output port is configured to output the DC charging current; and the feedback receiving port is configured to receive a feedback signal to adjust the output DC charging current;
the first charging port is configured to connect with a charging terminal, to output the output DC charging current to the charging terminal; the first charging port includes at least a first power supply port and a first data signal port; and the first power supply port which is connected with the voltage output port, is configured to output the DC charging current; and
the first switch device which is provided between the feedback receiving port and the first charging port, is configured to control the feedback receiving port to be connected with the first power supply port or the first data signal port according to the first charging control device.

Some of advantages of the present disclosure may include: by utilizing the first data signal port of the charger to obtain the feedback signal from the charging terminal, the voltage drop across the USB wire between the terminal and the charger will be eliminated, such that a charging voltage of 5 ± 5%V may be obtained by the charging terminal. Thus, a high voltage battery may be fast charged with a constant current.

The charger has a proximal feedback state and distal feedback state (respectively also named first and second feedback state);
when the charger is in the proximal feedback state, the first switch device controls the feedback receiving port to be connected with the first power supply port according to the first charging control device; and
when the charger is in the distal feedback state, the first switch device controls the feedback receiving port to be connected with the first data signal port according to the first charging control device.

Since at a start of a charging operation, the charging terminal needs to determine the type of a charger through a connection state with the first data signal port of the charger, at this time, the charger can not obtain the feedback signal through the data signal port, but only obtain the feedback signal through the first power supply port of the charger. When the charging terminal is informed of the type of the charger, the data signal port between the charging terminal and the charger is free, thus, the feedback signal may be transmitted through the data signal ports of the charging terminal and the charger. Some of advantages of the present disclosure may include: by setting two states for the charger, at the time when the normal charging operation of the charger is ensured, the voltage drop across the USB wire between the terminal and the charger will be eliminated, such that a charging voltage of 5 ± 5%V may be obtained by the charging terminal. Thus, the high voltage battery may be fast charged with a constant current.

The first data signal port includes a D+ port and a D- port;
when the charger is in the distal feedback state, the first switch device controls the feedback receiving port to be connected with the D+ port or the D- port according to the first charging control device.

Some of advantages of the present disclosure may include: by utilizing the D+ port or the D- port of the charger to transmit the feedback signal from the charging management chip of the terminal to the charger, the voltage drop across the USB wire between the terminal and the charger will be eliminated, such that a charging voltage of 5 ± 5%V may be obtained at the voltage input port of the charging management chip of the terminal. Thus, the high voltage battery may be fast charged with a constant current.

The first charging control device is configured to control the charger to be in the proximal feedback state when a charging operation is started, and control the charger to be in the distal feedback state when a duration time of the charging operation exceeds a preset time delay.

Some of the advantages of the present disclosure may include: by monitoring the duration time of the charging operation, whether the charger is in the proximal feedback state or the distal feedback state may be determined, so as to receive the feedback signal from different ports. By obtaining the feedback signal from the ports of the charging terminal, the voltage drop across the USB wire between the terminal and the charger will be eliminated, such that a charging voltage of 5 ± 5%V may be obtained at the voltage input port of the charging management chip of the terminal. Thus, the high voltage battery may be fast charged with a constant current.

The first charging port is a USB interface or a Micro USB interface.

Whether the first charging port is a USB interface or a Micro USB interface, the feedback signal may be obtained from the charging terminal through the solution of the above embodiments, to eliminate the voltage drop across the USB wire between the terminal and the charger, such that a charging voltage of 5 ± 5%V may be obtained at the voltage input port of the charging management chip of the terminal. Thus, the high voltage battery may be fast charged with a constant current.

In another aspect, a charging terminal such as a smart electronic terminal is provided by the present disclosure, which includes: a charging management chip, a second charging port, a second switch device and a second charging control device, wherein
the charging management chip is configured to receive an input DC charging current to charge the charging terminal; the charging management chip includes at least a voltage input port and a chip data port; and the voltage input port is configured to input the DC charging current;
the second charging port is configured to connect with the charger to receive the DC charging current that is input from the charger; the second charging port includes at least a second power supply port and a second data signal port; and the second power supply port which is connected with the voltage input port, is configured to output the DC charging current to the charging management chip; and
the second switch device which is provided between the charging management chip and the second charging port, is configured to control the second data signal port to be connected with the voltage input port or the chip data port according to the second charging control device.

Some of advantages of the present disclosure may include: by utilizing the second data signal port of the charging terminal to transmit the feedback signal to the charger, the voltage drop across a USB wire between the terminal and the charger will be eliminated, such that a charging voltage of 5 ± 5%V may be obtained at the voltage input port of the charging management chip of the terminal. Thus, the high voltage battery may be fast charged with a constant current.

The charging system has a proximal feedback state and a distal feedback state;
when the charging system is in the proximal feedback state, the second switch device controls the second data signal port to be connected with the chip data port according to the second charging control device; and
when the charging system is in the distal feedback state, the second switch device controls the second data signal port to be connected with the voltage input port according to the second charging control device.

Since at a start of a charging operation, the charging terminal needs to determine the type of a charger through the connection state of its second data signal port with the first data signal port of the charger, at this time, the charger can not send the feedback signal through the data signal port, and the charger can only obtain the feedback signal through the first power supply port of the charger. When the charging terminal is informed of the type of the charger, the data signal port between the charging terminal and the charger is free, thus, the feedback signal may be transmitted through the data signal ports of the charging terminal and the charger. Some of advantages of the present disclosure may include: by setting two states for the charging terminal, at the time when the normal charging operation of the charger is ensured, the voltage drop across the USB wire between the terminal and the charger will be eliminated, such that a charging voltage of 5 ± 5%V may be obtained by the charging terminal. Thus, the high voltage battery may be fast charged with a constant current.

The second data signal port includes a D+ port and a D- port;
when the charging system is in the proximal feedback state, the second switch device controls the D+ port or the D- port to be connected with the chip data port according to the second charging control device; and
when the charging system is in the distal feedback state, the second switch device controls the D+ port or the D- port to be connected with the voltage input port according to the second charging control device.

Some of advantages of the present disclosure may include: by utilizing the D+ port or the D- port of the terminal to transmit the feedback signal from the charging management chip of the terminal to the charger, the voltage drop across the USB wire between the terminal and the charger will be eliminated, such that a charging voltage of 5 ± 5%V may be obtained at the voltage input port of the charging management chip of the terminal. Thus, the high voltage battery may be fast charged with a constant current.

The second charging control device is configured to control the charging terminal to be in the proximal feedback state when a charging operation is started, and control the charging terminal to be in the distal feedback state when a duration time of the charging operation exceeds a preset time delay.

Some of advantages of the present disclosure may include: by monitoring the duration time of the charging operation, whether the charging terminal is in the proximal feedback state or the distal feedback state may be determined, so as to transmit the feedback signal to the charger. By obtaining the feedback signal from the charging terminal, the voltage drop across the USB wire between the terminal and the charger will be eliminated, such that a charging voltage of 5 ± 5%V may be obtained at the voltage input port of the charging management chip of the terminal. Thus, the high voltage battery may be fast charged with a constant current.

The second charging port is a USB interface or a Micro USB interface.

Whether the second charging port is a USB interface or a Micro USB interface, the feedback signal may be obtained from the charging terminal through the solution of the above embodiments, to eliminate the voltage drop across the USB wire between the terminal and the charger, such that a charging voltage of 5 ± 5%V may be obtained at the voltage input port of the charging management chip of the terminal. Thus, the high voltage battery may be fast charged with a constant current.

In another aspect, a charging system is provided by the present disclosure, which includes: a charger and a charging terminal, and the charger is connected with the charging terminal, thereby the charger charges the charging terminal, wherein
the charger includes a power supply device, a first charging port, a first charging control device and a first switch device;
the power supply device is configured to output a DC charging current by rectifying and voltage-reducing an input AC charging current; the power supply device includes at least a voltage output port and a feedback receiving port; the voltage output port is configured to output the DC charging current; and the feedback receiving port is configured to receive a feedback signal to adjust the output DC charging current;
the first charging port is configured to connect with a charging terminal, to output the output DC charging current to the charging terminal; the first charging port includes at least a first power supply port and a first data signal port; and the first power supply port which is connected with the voltage output port, is configured to output the DC charging current;
the first switch device which is provided between the feedback receiving port and the first charging port, is configured to control the feedback receiving port to be connected with the first power supply port or the first data signal port according to the first charging control device;
the charging terminal includes: a charging management chip, a second charging port, a second charging control device and a second switch device;
the charging management chip is configured to receive the input DC charging current to charge the charging terminal; the charging management chip includes at least a voltage input port and a chip data port; and the voltage input port is configured to input the DC charging current;
the second charging port is configured to connect with the charger to receive the DC charging current that is input from the charger; the second charging port includes at least a second power supply port and a second data signal port; and the second power supply port which is connected with the voltage input port, is configured to output the DC charging current to the charging management chip; and
the second switch device which is provided between the charging management chip and the second charging port, is configured to control the second data signal port to be connected with the voltage input port or the chip data port according to the second charging control device.

The charging system has a proximal feedback state and a distal feedback state;
when the charging system is in the proximal feedback state, the first switch device controls the feedback receiving port to be connected with the first power supply port according to the first charging control device; and the second switch device controls the second data signal port to be connected with the chip data port according to the second charging control device; and
when the charging system is in the distal feedback state, the first switch device controls the feedback receiving port to be connected with the first data signal port according to the first charging control device; and the second switch device controls the second data signal port to be connected with the voltage input port according to the second charging control device.

Each of the first data signal port and the second data signal port includes a D+ port and a D- port;
when the charging system is in the proximal feedback state, the second switch device controls the D+ port to be connected with the chip data port according to the second charging control device;
when the charging system is in the distal feedback state, the first switch device controls the feedback receiving port to be connected with the D+ port according to the first charging control device; and the second switch device controls the D+ port to be connected with the voltage input port according to the second charging control device;
or,
when the charging system is in the proximal feedback state, the second switch device controls the D- port to be connected with the chip data port according to the second charging control device; and
when the charging system is in the distal feedback state, the first switch device controls the feedback receiving port to be connected with the D- port according to the first charging control device; and the second switch device controls the D- port to be connected with the voltage input port according to the second charging control device.

The first charging control device is configured to control the charger to be in the proximal feedback state when a charging operation is started, and control the charger to be in the distal feedback state when a duration time of the charging operation exceeds a preset time delay;
the second charging control device is configured to control the charging terminal to be in the proximal feedback state when the charging operation is started, and control the charging terminal to be in the distal feedback state when the duration time of the charging operation exceeds a preset time delay; and
the preset time delays for the first charging control device and the second charging control device are the same.

The first charging port is a USB interface or a Micro USB interface; and the second charging port is a USB interface or a Micro USB interface.

In another aspect, a control method for charging is provided, which is implemented based on the above charging system. The control method for charging includes:
when a charging operation is started, controlling the charging system to be in the proximal feedback state; and when the charging system is in the proximal feedback state, controlling the feedback receiving port to be connected with the first power supply port according to the first charging control device by the first switch device of the charger; and controlling the second data signal port to be connected with the chip data port according to the second charging control device by the second switch device of the charging terminal;
determining whether a duration time of the charging operation exceeds a preset time delay; and
when the duration time of the charging operation exceeds the preset time delay, controlling the charging system to be in the distal feedback state; and when the charging system is in the distal feedback state, controlling the feedback receiving port to be connected with the first data signal port according to the first charging control device by the first switch device, and controlling the second data signal port to be connected with the voltage input port according to the second charging control device by the second switch device.

Each of the first and second data signal ports includes a D+ port and a D-port;
when the charging system is in the proximal feedback state, the second switch device controls the D+ port to be connected with the chip data port according to the second charging control device; and
when the charging system is in the distal feedback state, the first switch device controls the feedback receiving port to be connected with the D+ port according to the first charging control device; and the second switch device controls the D+ port to be connected with the voltage input port according to the second charging control device;
or,
when the charging system is in the proximal feedback state, the second switch device controls the D- port to be connected with the chip data port according to the second charging control device; and
when the charging system is in the distal feedback state, the first switch device controls the feedback receiving port to be connected with the D- port according to the first charging control device; and the second switch device controls the D- port to be connected with the voltage input port according to the second charging control device.

In another aspect, a program product is provided, which has stored therein instructions that, when executed by one or more processors of the charging system, causes the charging system to perform:
when a charging operation is started, controlling the charging system to be in the proximal feedback state; and when the charging system is in the proximal feedback state, controlling the feedback receiving port to be connected with the first power supply port according to the first charging control device by the first switch device of the charger; and controlling the second data signal port to be connected with the chip data port according to the second charging control device by the second switch device of the charging terminal;
determining whether a duration time of the charging operation exceeds a preset time delay; and
when the duration time of the charging operation exceeds the preset time delay, controlling the charging system to be in the distal feedback state; and when the charging system is in the distal feedback state, controlling the feedback receiving port to be connected with the first data signal port according to the first charging control device by the first switch device, and controlling the second data signal port to be connected with the voltage input port according to the second charging control device by the second switch device.

It should be appreciated that, the above general description and the following detailed description are merely exemplary, and do not limit the disclosure.

The solution of the present disclosure will be described in further detail in reference with accompany drawings and embodiments.

### BRIEF DESCRIPTION OF THE DRAWINGS

The accompany drawings which constitute a part of the description, are provided for a better understanding of the present disclosure, and serve to explain the present disclosure together with embodiments of the present disclosure, but do not constitute a limitation to the present disclosure, in which:
Fig.1 is an exemplary block diagram showing a charger;
Fig.2 is an exemplary block diagram showing a charging terminal;
Fig.3 is an exemplary block diagram showing a charging system;
Fig.4 is an exemplary flow chart showing a control method for charging;
Fig.5 is another exemplary block diagram showing a charging system; and
Fig.6 is yet another exemplary block diagram showing a charging system.

Explicit embodiments of the present disclosure that have been illustrated in the above accompany drawings will be described in more detail hereinafter. The accompanying drawings and literal description are intended to explain the concept of the present disclosure to those skilled in the art with reference to particular embodiments.

### DETAILED DESCRIPTION

In order to make the objects, the technical solutions and advantages more clear, the present disclosure will be described in further detail with reference to the embodiments and the accompanying drawings.

A charger, a charging terminal, a charging system and a control method for charging are provided by embodiments of the present disclosure, which will be described in detail with reference to the accompanying drawings.

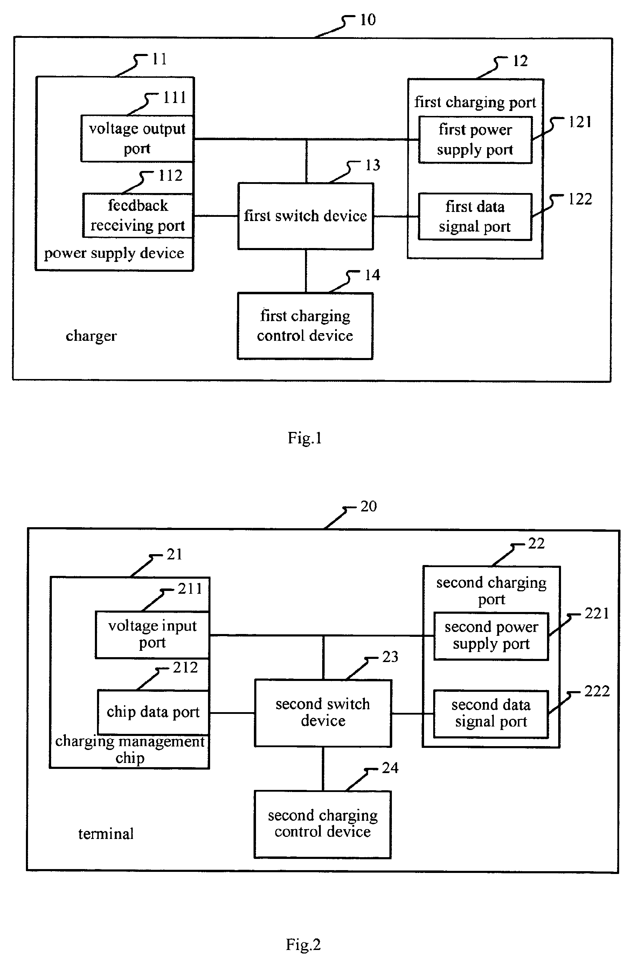

In one embodiment, as shown in Fig.1, a charger 10 includes a power supply device 11, a first charging port 12, a first switch device 13 and a first charging control device 14.

The power supply device 11 is configured to output a DC charging current by rectifying and voltage-reducing an input AC charging current. The power supply device 11 includes at least a voltage output port 111 and a feedback receiving port 112. The voltage output port 111 is configured to output the DC charging current. The feedback receiving port 112 is configured to receive a feedback signal to adjust the output DC charging current.

The first charging port 12 is configured to connect with a charging terminal, to output the output DC charging current to the charging terminal. The first charging port 12 includes at least a first power supply port 121 and a first data signal port 122. The first power supply port 121 which is connected with the voltage output port 111, is configured to output the DC charging current.

The first switch device 13 which is provided between the feedback receiving port 112 and the first charging port 12, is configured to control the feedback receiving port 112 to be connected with the first power supply port 121 or the first data signal port 122 according to the first charging control device 14.

In this embodiment, by utilizing the first data signal port of the charger to obtain the feedback signal from the charging terminal, a voltage drop across a USB wire between the terminal and the charger will be eliminated, such that a charging voltage of 5±5%V may be obtained by the charging terminal. Thus, a high voltage battery may be fast charged with a constant current.

The charger 10 has a proximal feedback state and a distal feedback state. When the charger is in the proximal feedback state, the first switch device 13 controls the feedback receiving port 112 to be connected with the first power supply port 121 according to the first charging control device 14. When the charger is in the distal feedback state, the first switch device 13 controls the feedback receiving port 112 to be connected with the first data signal port 122 according to the first charging control device 14.

Since at a start of a charging operation, the charging terminal needs to determine the type of a charger through a connection state with the first data signal port of the charger, at this time, the charger can not obtain the feedback signal through the data signal port, but only obtain the feedback signal through the first power supply port of the charger. When the charging terminal is informed of the type of the charger, the data signal ports of the charging terminal and the charger are free, thus, the feedback signal may be transmitted through the data signal ports of the charging terminal and the charger. In this embodiment, by setting two states for the charger, at the time when the normal charging operation of the charger is ensured, the voltage drop across the USB wire between the terminal and the charger will be eliminated, such that a charging voltage of 5 ± 5%V may be obtained by the charging terminal. Thus, the high voltage battery may be fast charged with a constant current.

The first data signal port 122 includes a D+ port and a D- port. When the charger 10 is in the distal feedback state, the first switch device 13 controls the feedback receiving port 112 to be connected with the D+ port or the D- port according to the first charging control device 14.

In this embodiment, by utilizing the D+ port or the D- port of the charger to transmit the feedback signal from a charging management chip of the terminal to the charger, the voltage drop across the USB wire between the terminal and the charger will be eliminated, such that a charging voltage of 5 ± 5%V may be obtained at a voltage input port of the charging management chip of the terminal. Thus, the high voltage battery may be fast charged with a constant current.

The first charging control device 14 is configured to control the charger 10 to be in the proximal feedback state when the charging operation is started, and control the charger 10 to be in the distal feedback state when a duration time of the charging operation exceeds a preset time delay.

In this embodiment, by monitoring the duration time of the charging operation, whether the charger is in the proximal feedback state or the distal feedback state may be determined, such that the feedback signal may be received from different ports. By obtaining the feedback signal from the charging terminal, the voltage drop across the USB wire between the terminal and the charger will be eliminated, such that a charging voltage of 5 ± 5%V may be obtained at the voltage input port of the charging management chip of the terminal. Thus, the high voltage battery may be fast charged with a constant current.

In this embodiment, the first charging port 12 is a USB interface or a Micro USB interface.

Whether the first charging port is the USB interface or the Micro USB interface, the feedback signal may be obtained from the charging terminal through the solution of the above embodiments, to eliminate the voltage drop across the USB wire between the terminal and the charger, such that a charging voltage of 5 ± 5%V may be obtained at the voltage input port of the charging management chip of the terminal. Thus, the high voltage battery may be fast charged with a constant current.

In another embodiment, as shown in Fig.2, a charging terminal 20 such as a smart electronic terminal includes a charging management chip 21, a second charging port 22, a second switch device 23 and a second charging control device 24.

The charging management chip 21 is configured to receive an input DC charging current to charge the charging terminal. The charging management chip 21 includes at least a voltage input port 211 which is configured to input the DC charging current, and a chip data port 212.

The second charging port 22 is configured to connect with the charger 10 to receive the DC charging current that is input from the charger 10. The second charging port 22 includes at least a second power supply port 221 and a second data signal port 222. The second power supply port 221 which is connected with the voltage input port 211, is configured to output the DC charging current to the charging management chip 21.

The second switch device 23 which is provided between the charging management chip 21 and the second charging port 22, is configured to control the second data signal port 222 to be connected with the voltage input port 211 or the chip data port 212 according to the second charging control device 24.

In this embodiment, by utilizing the second data signal port of the charging terminal to transmit a feedback signal to the charger, a voltage drop across the USB wire between the terminal and the charger will be eliminated, such that a charging voltage of 5 ± 5%V may be obtained at the voltage input port of the charging management chip of the terminal. Thus, a high voltage battery may be fast charged with a constant current.

The charging terminal 20 has a proximal feedback state and a distal feedback state. When the charging terminal 20 is in the proximal feedback state, the second switch device 23 controls the second data signal port 222 to be connected with the chip data port 212 according to the second charging control device 24. When the charging terminal 20 is in the distal feedback state, the second switch device 23 controls the second data signal port 222 to be connected with the voltage input port 211 according to the second charging control device 24.

Since at a start of a charging operation, the charging terminal need to determine the type of a charger through the connection state of its second data signal port with the first data signal port of the charger, at this time, the charging terminal can not send the feedback signal through the data signal port, and the charger can only obtain the feedback signal through the first power supply port of the charger. When the charging terminal is informed of the type of the charger, the data signal ports of the charging terminal and the charger are free, thus, the feedback signal may be transmitted through the data signal ports of the charging terminal and the charger. In this embodiment, by setting two states for the charging terminal, at the time when a reception of the normal charging operation is ensured, the voltage drop across the USB wire between the terminal and the charger will be eliminated, such that a charging voltage of 5 ± 5%V may be obtained by the charging terminal. Thus, the high voltage battery may be fast charged with a constant current.

The second data signal port 222 includes a D+ port and a D- port. When the charging terminal 20 is in the proximal feedback state, the second switch device 23 controls the D+ port or the D- port to be connected with the chip data port 212 according to the second charging control device 24. When the charging terminal 20 is in the distal feedback state, the second switch device 23 controls the D+ port or the D-port to be connected with the voltage input port 211 according to the second charging control device 24.

In this embodiment, by utilizing the D+ port or the D- port of the terminal to transmit the feedback signal from the charging management chip of the terminal to the charger, the voltage drop across the USB wire between the terminal and the charger will be eliminated, such that a charging voltage of 5 ± 5%V may be obtained at the voltage input port of the charging management chip of the terminal. Thus, the high voltage battery may be fast charged with a constant current.

The second charging control device 24 is configured to control the charging terminal 20 to be in the proximal feedback state when the charging operation is started, and control the charging terminal 20 to be in the distal feedback state when a duration time of the charging operation exceeds a preset time delay.

In this embodiment, by monitoring the duration time of the charging operation, whether the charging terminal is in the proximal feedback state or the distal feedback state may be determined, so as to transmit the feedback signal to the charger. By obtaining the feedback signal from the port of the charging terminal, the voltage drop across the USB wire between the terminal and the charger will be eliminated, such that a charging voltage of 5 ± 5%V may be obtained at the voltage input port of the charging management chip of the terminal. Thus, the high voltage battery may be fast charged with a constant current.

The second charging port 22 is a USB interface or a Micro USB interface.

Whether the second charging port is the USB interface or the Micro USB interface, the feedback signal may be obtained from the charging terminal through the solution of the above embodiments, to eliminate the voltage drop across the USB wire between the terminal and the charger, such that a charging voltage of 5 ± 5%V may be obtained at the voltage input port of the charging management chip of the terminal. Thus, the high voltage battery may be fast charged with a constant current.

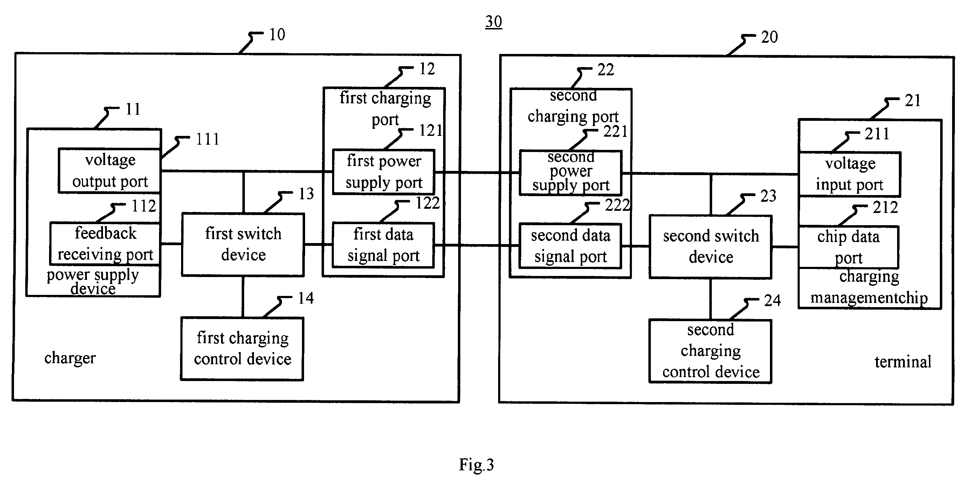

In another embodiment, as shown in Fig.3, a charging system 30 is provided by the present disclosure, which includes a charger 10 and a charging terminal 20. The charger 10 is connected with the charging terminal 20, thereby the charger 10 charges the charging terminal 20.

The charger 10 includes a power supply device 11, a first charging port 12, a first switch device 13 and a first charging control device 14.

The power supply device 11 is configured to output a DC charging current by rectifying and voltage-reducing an input AC charging current. The power supply device 11 includes at least a voltage output port 111 and a feedback receiving port 112. The voltage output port 111 is configured to output the DC charging current. The feedback receiving port 112 is configured to receive a feedback signal to adjust the output DC charging current.

The first charging port 12 is configured to connect with a charging terminal, to output the output DC charging current to the charging terminal. The first charging port 12 includes at least a first power supply port 121 and a first data signal port 122. The first power supply port 121 which is connected with the voltage output port 111, is configured to output the DC charging current.

The first switch device 13 which is provided between the feedback receiving port 112 and the first charging port 12, is configured to control the feedback receiving port 112 to be connected with the first power supply port 121 or the first data signal port 122 according to the first charging control device 14.

The charging terminal 20 includes a charging management chip 21, a second charging port 22, a second switch device 23 and a second charging control device 24.

The charging management chip 21 is configured to receive the input DC charging current to charge the charging terminal. The charging management chip 21 includes at least a voltage input port 211 which is configured to input the DC charging current, and a chip data port 212.

The second charging port 22 is configured to connect with the charger 10 to receive the DC charging current that is input from the charger 10. The second charging port 22 includes at least a second power supply port 221 and a second data signal port 222. The second power supply port 221 which is connected with the voltage input port 211 is configured to output the DC charging current to the charging management chip 21.

The second switch device 23 which is provided between the charging management chip 21 and the second charging port 22, is configured to control the second data signal port 222 to be connected with the voltage input port 211 or the chip data port 212 according to the second charging control device 24

The charging system 30 has a proximal feedback state and a distal feedback state.

When the charging system 30 is in the proximal feedback state, the first switch device 13 controls the feedback receiving port 112 to be connected with the first power supply port 121 according to the first charging control device 14, and the second switch device 23 controls the second data signal port 222 to be connected with the chip data port 212 according to the second charging control device 24.

When the charging system 30 is in the distal feedback state, the first switch device 13 controls the feedback receiving port 112 to be connected with the first data signal port 122 according to the first charging control device 14, and the second switch device 23 controls the second data signal port 222 to be connected with the voltage input port 211 according to the second charging control device 24.

Each of the first data signal port 122 and the second data signal port 222 includes a D+ port and a D- port.

When the charging system 30 is in the proximal feedback state, the second switch device 23 controls the D+ port to be connected with the chip data port 212 according to the second charging control device 24;
when the charging terminal 20 is in the distal feedback state, the first switch device 13 controls the feedback receiving port 112 to be connected with the D+ port according to the first charging control device 14; and the second switch device 23 controls the D+ port to be connected with the voltage input port 211 according to the second charging control device 24;
or,
when the charging system 30 is in the proximal feedback state, the second switch device controls the D- port to be connected with the chip data port according to the second charging control device;
when the charging terminal 20 is in the distal feedback state, the first switch device 13 controls the feedback receiving port 112 to be connected with the D+ port or the D- port according to the first charging control device 14; and the second switch device 23 controls the D+ port or the D- port to be connected with the voltage input port 211 according to the second charging control device 24.

The first charging control device 14 is configured to control the charger 10 to be in the proximal feedback state when a charging operation is started, and control the charger 10 to be in the distal feedback state when a duration time of the charging operation exceeds a preset time delay. The second charging control device 24 is configured to control the charging terminal 20 to be in the proximal feedback state when the charging operation is started, and control the charging terminal 20 to be in the distal feedback state when the duration time of the charging operation exceeds a preset time delay. The preset time delays for the first charging control device 14 and the second charging control device 24 are the same.

The first charging port is a USB interface or a Micro USB interface; and the second charging port is a USB interface or a Micro USB interface.

The first charging port of the charger and the second charging port of the charging terminal may be the same type of port or different types of ports, that is, the two ends of the USB wire between the charger and the charging terminal may be the same type of port or different types of ports.

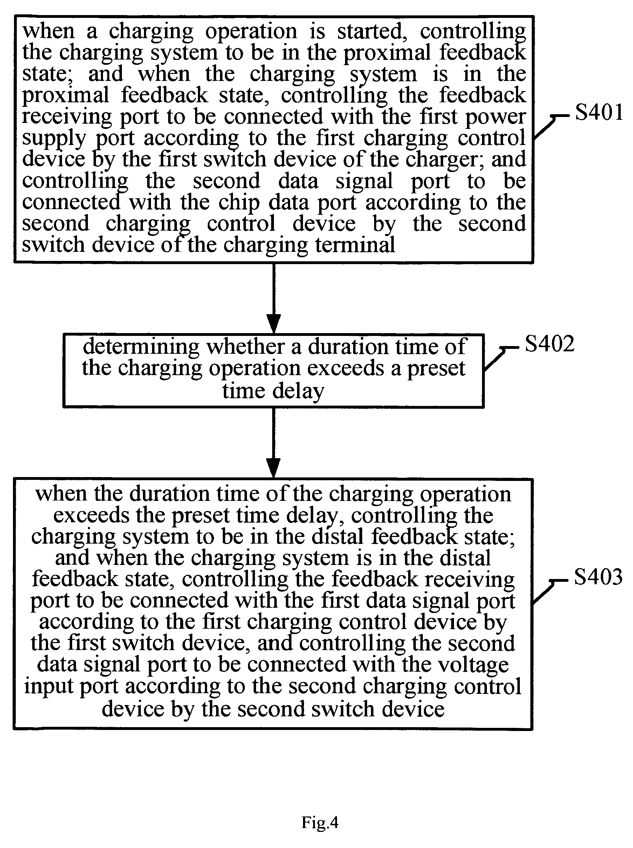

In another embodiment, a control method for charging is provided by the present disclosure, based on the above charging system, and as shown in Fig.4, the control method for charging includes the following steps.

In step S401, when a charging operation is started, the charging system is controlled to be in the proximal feedback state; and when the charging system is in the proximal feedback state, the first switch device of the charger controls the feedback receiving port to be connected with the first power supply port according to the first charging control device; and the second switch device of the charging terminal controls the second data signal port to be connected with the chip data port according to the second charging control device.

In step S402, it is determined whether a duration time of the charging operation exceeds a preset time delay.

In step S403, when the duration time of the charging operation exceeds the preset time delay, the charging system is controlled to be in the distal feedback state; and when the charging system is in the distal feedback state, the first switch device controls the feedback receiving port to be connected with the first data signal port according to the first charging control device, and the second switch device controls the second data signal port to be connected with the voltage input port according to the second charging control device.

Each of the first and second data signal ports includes a D+ port and a D-port. When the charging system is in the proximal feedback state, the second switch device controls the D+ port to be connected with the chip data port according to the second charging control device; and when the charging terminal is in the distal feedback state, the first switch device controls the feedback receiving port to be connected with the D+ port according to the first charging control device; and the second switch device controls the D+ port to be connected with the voltage input port according to the second charging control device.

Or, when the charging system is in the proximal feedback state, the second switch device controls the D- port to be connected with the chip data port according to the second charging control device; and when the charging terminal is in the distal feedback state, the first switch device controls the feedback receiving port to be connected with the D- port according to the first charging control device; and the second switch device controls the D- port to be connected with the voltage input port according to the second charging control device.

Hereinafter, the present disclosure will be described in detail, respectively with reference to a case that each of the first and second data signal ports is a D+ port, and a case that each of the first and second data signal ports is a D- port.
(I) In the case that each of the first and second data signal ports is a D+ port, the feedback signal is transmitted between the charger and the charging terminal through the D+ ports.

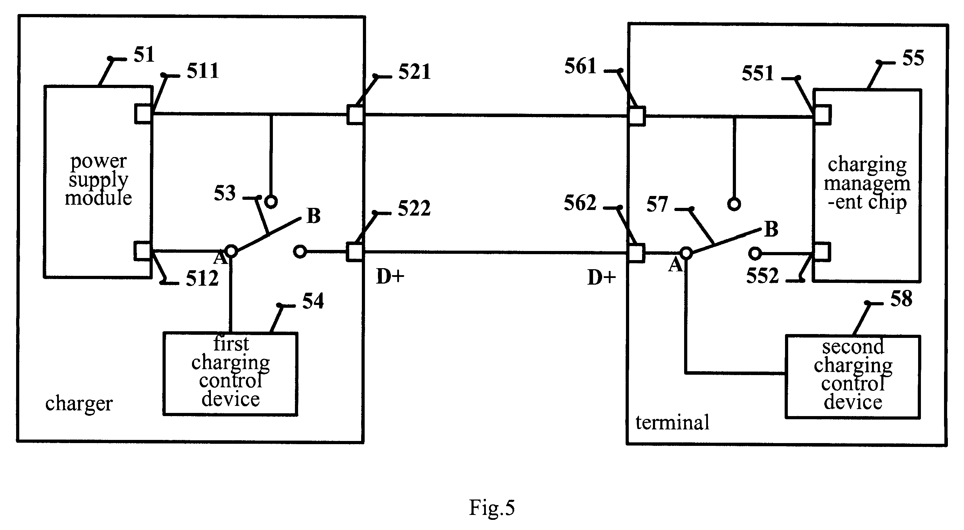

In this embodiment, as shown in Fig.5, the first switch device of the charger may be a Single-Pole Double-Throw (SPDT) switch 53. An end A of the SPDT switch 53 is connected with a feedback receiving port 512 of a power supply module 51, and an end B of the SPDT switch 53 may be connected to a first power supply port 521 of the first charging port or to a D+ port 522 of the charger according to a control of a first charging control device 54. When the charging operation is started, the first charging control device 54 controls the end B of the SPDT switch 53 to be connected to the first power supply port 521 of the first charging port. After the charging operation lasts for a certain period, the first charging control device 54 controls the end B of the SPDT switch 53 to be connected to the D+ port 522 of the charger.

The second switch device of the charging terminal may also be a SPDT switch 57. An end A of the SPDT switch 57 is connected with the D+ port 562 of the second charging port, and an end B of the SPDT switch 57 may be connected to a voltage input port 551 or to a chip data port 552 of a charging management chip 55 according to a control of the second charging control device 58. When the charging operation is started, the second charging control device 58 controls the end B of the SPDT switch 57 to be connected to the chip data port 552 of the charging management chip 55. After the charging operation lasts for a certain period, the second charging control device 58 controls the end B of the SPDT switch 57 to be connected to the voltage input port 551 of the charging management chip 55.

In this embodiment, the feedback is no longer directly connected to the voltage output port of the charger, but to the SPDT switch 53, and the other end of the SPDT switch 53 may be connected respectively to the first power supply port 521 or the D+ port 522 according to the control.

The SPDT switch 57 is also added to the charging terminal. One end of the SPDT switch 57 is connected to the D+ port 562 of the charging terminal (to be in consistence with the charger), and the other end of the SPDT switch 57 may be connected to the voltage input port 551 or the chip data port 552 of the charging management chip 55.

In this embodiment, by transmitting the feedback signal through the connection between the D+ ports of the charger and the charging terminal, so as to allow the feedback signal to reflect the voltage drop across the USB wire between the charger and the charging terminal, the voltage drop across the USB wire between the terminal and the charger will be eliminated, such that a charging voltage of 5 ± 5%V may be obtained at the voltage input port of the charging management chip of the terminal. Thus, the high voltage battery may be fast charged with a constant current.
(II) In the case that each of the first and second data signal ports is a D-port, the feedback signal is transmitted between the charger and the charging terminal through the D- ports.

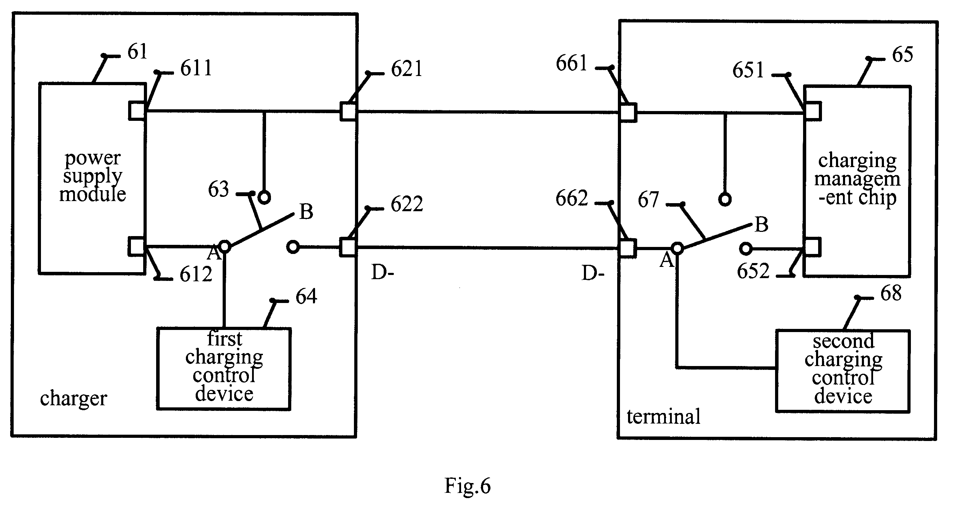

As shown in Fig.6, the first switch device of the charger may be a SPDT switch 63. An end A of the SPDT switch 63 is connected with a feedback receiving port 612 of a power supply module 61, and an end B of the SPDT switch 63 may be connected to a first power supply port 621 of the first charging port or to a D- port 622 of the charger according to a control of the first charging control device 64. When the charging operation is started, the first charging control device 64 controls the end B of the SPDT switch 63 to be connected to the first power supply port 621 of the first charging port. After the charging operation lasts for a certain period, the control device 64 controls the end B of the SPDT switch 63 to be connected to the D- port 622 of the charger.

The second switch device of the charging terminal may also be a SPDT switch 67. An end A of the SPDT switch 67 is connected with a D- port 662 of the second charging port, and a end B of the SPDT switch 67 may be connected to a voltage input port 651 or to a chip data port 652 of a charging management chip 65 according to a control of the second charging control device 68. When the charging operation is started, the second charging control device 68 controls the end B of the SPDT switch 67 to be connected to the chip data port 652 of the charging management chip 65. After the charging operation lasts for a certain period, the second charging control device 68 controls the end B of the SPDT switch 67 to be connected to the voltage input port 651 of the charging management chip 65.

In this embodiment, the feedback is no longer directly connected to the voltage output port of the charger, but to the SPDT switch 63, and the other end of the SPDT switch 63 may be connected respectively to the first power supply port 621 or the D- port 622 according to the control.

The SPDT switch 67 is also added to the charging terminal. One end of the SPDT switch 67 is connected to the D- port 662 of the charging terminal (to be in consistence with the charger), and the other end of the SPDT switch 67 may be connected to the voltage input port 651 or the chip data port 652 of the charging management chip 65.

In this embodiment, by transmitting the feedback signal through the connection between the D- ports of the charger and the charging terminal, so as to allow the feedback signal to reflect the voltage drop across the USB wire between the charger and the charging terminal, the voltage drop across the USB wire between the terminal and the charger will be eliminated, such that a charging voltage of 5 ± 5%V may be obtained at the voltage input port of the charging management chip of the terminal. Thus, the high voltage battery may be fast charged with a constant current.

In exemplary embodiments, there is also provided a program product having stored therein instructions that, when executed by one or more processors of the charging system, causes the charging system to perform:
when a charging operation is started, controlling the charging system to be in the proximal feedback state; and when the charging system is in the proximal feedback state, controlling the feedback receiving port to be connected with the first power supply port according to the first charging control device by the first switch device of the charger; and controlling the second data signal port to be connected with the chip data port according to the second charging control device by the second switch device of the charging terminal;
determining whether a duration time of the charging operation exceeds a preset time delay; and
when the duration time of the charging operation exceeds the preset time delay, controlling the charging system to be in the distal feedback state; and when the charging system is in the distal feedback state, controlling the feedback receiving port to be connected with the first data signal port according to the first charging control device by the first switch device, and controlling the second data signal port to be connected with the voltage input port according to the second charging control device by the second switch device.

The functions, steps and/or operations of the method claims according to the described embodiments of the present disclosure, may not necessarily be performed in a particular order. In addition, although elements of the present disclosure may be described or prescribed in a single form, multiple forms may also be devised, unless the single form is explicitly prescribed.

The objects, technical solutions and advantageous effects of the present disclosure have been explained in a further detail with the above specific embodiments. It should be appreciated that, the above are merely specific embodiments of the present disclosure, and not intended to limit the present disclosure.

## Claims

1. A charger (10), the charger comprising: a power supply device (11), a first charging port (12), a first charging control device (14) and a first switch device (13), wherein
the power supply device (11) is configured to output a DC charging current by rectifying and voltage-reducing an input AC charging current; the power supply device comprises at least a voltage output port (111) and a feedback receiving port (112); the voltage output port is configured to output the DC charging current; and the feedback receiving port is configured to receive a feedback signal to adjust the output DC charging current;
the first charging port (12) is configured to connect with a charging terminal (20), to output the output DC charging current to the charging terminal; the first charging port comprises at least a first power supply port (121) and a first data signal port (122); and the first power supply port which is connected with the voltage output port, is configured to output the DC charging current; and
the first switch device (13) which is provided between the feedback receiving port (112) and the first charging port (12), is configured to control the feedback receiving port to be connected with the first power supply port (121) or the first data signal port (122) according to the first charging control device (14),
**characterized in that**,
the charger (10) has a first feedback state and a second feedback state, wherein
when the charger is in the first feedback state, the first switch device controls the feedback receiving port to be connected with the first power supply port according to the first charging control device; and
when the charger is in the second feedback state, the first switch device controls the feedback receiving port to be connected with the first data signal port according to the first charging control device.

2. The charger according to claim 1, wherein, the first data signal port (122) comprises a D+ port and a D- port, wherein
when the charger is in the second feedback state, the first switch device controls the feedback receiving port to be connected with the D+ port or the D- port according to the first charging control device.

3. The charger according to claim 1, wherein,
the first charging control device (14) is configured to control the charger to be in the first feedback state when a charging operation is started, and control the charger to be in the second feedback state when a duration time of the charging operation exceeds a preset time delay.

4. The charger according to claim 1, wherein, the first charging port (12) is a universal serial bus, USB, interface or a Micro USB interface.

5. A charging terminal (20), comprising: a charging management chip (21), a second charging port (22), a second switch device (23) and a second charging control device (24), wherein
the charging management chip (21) is configured to receive an input DC charging current to charge the charging terminal; the charging management chip comprises at least a voltage input port (211) and a chip data port (212); and the voltage input port is configured to input the DC charging current;
the second charging port (22) is configured to connect with a charger (10) to receive the DC charging current that is input from the charger; the second charging port comprises at least a second power supply port (221) and a second data signal port (222); and the second power supply port which is connected with the voltage input port (211), is configured to output the DC charging current to the charging management chip (21); and
the second switch device (23) which is provided between the charging management chip (21) and the second charging port (22), is configured to control the second data signal port (222) to be connected with the voltage input port (211) or the chip data port (212) according to the second charging control device (24),
**characterized in that**,
the charging terminal (20) has a first feedback state and a second feedback state, wherein
when the charging terminal is in the first feedback state, the second switch device (23) controls the second data signal port (222) to be connected with the chip data port (212) according to the second charging control device (24); and
when the charging terminal is in the second feedback state, the second switch device (23) controls the second data signal port (222) to be connected with the voltage input port (211) according to the second charging control device (24).

6. The charging terminal according to claim 5, wherein, the second data signal port (222) comprises a D+ port and a D- port, wherein
when the charging terminal (20) is in the first feedback state, the second switch device (23) controls the D+ port or the D- port to be connected with the chip data port (212) according to the second charging control device (24); and
when the charging terminal is in the second feedback state, the second switch device (23) controls the D+ port or the D- port to be connected with the voltage input port (211) according to the second charging control device (24).

7. The charging terminal according to claim 5, wherein,
the second charging control device (24) is configured to control the charging terminal (20) to be in the first feedback state when a charging operation is started, and control the charging terminal to be in the second feedback state when a duration time of the charging operation exceeds a preset time delay.

8. The charging terminal according to claim 5, wherein, the second charging port (22) is a USB interface or a Micro USB interface.

9. A charging system (30), comprising: a charger (10) and a charging terminal (20), wherein when the charger is connected with the charging terminal, the charger is adapted to charge the charging terminal, wherein
the charger (10) comprises a power supply device (11), a first charging port (12), a first charging control device (14) and a first switch device (13);
the power supply device (11) is configured to output a DC charging current by rectifying and voltage-reducing an input AC charging current; the power supply device comprises at least a voltage output port (111) and a feedback receiving port (112); the voltage output port is configured to output the DC charging current; and the feedback receiving port is configured to receive a feedback signal to adjust the output DC charging current;
the first charging port (12) is configured to connect with the charging terminal (20), to output the output DC charging current to the charging terminal; the first charging port comprises at least a first power supply port (121) and a first data signal port (122); and the first power supply port which is connected with the voltage output port (111), is configured to output the DC charging current;
the first switch device (13) which is provided between the feedback receiving port (112) and the first charging port (12), is configured to control the feedback receiving port to be connected with the first power supply port (121) or the first data signal port (122) according to the first charging control device (14);
the charging terminal (20) comprises: a charging management chip (21), a second charging port (22), a second charging control device (23) and a second switch device (24);
the charging management chip (21) is configured to receive the input DC charging current to charge the charging terminal; the charging management chip comprises at least a voltage input port (211) and a chip data port (212); and the voltage input port is configured to input the DC charging current;
the second charging port (22) is configured to connect with the charger to receive the DC charging current that is input from the charger; the second charging port comprises at least a second power supply port (221) and a second data signal port (222); and the second power supply port which is connected with the voltage input port (211), is configured to output the DC charging current to the charging management chip (21); and
the second switch device (23) which is provided between the charging management chip (21) and the second charging port (22), is configured to control the second data signal port (222) to be connected with the voltage input port (211) or the chip data port (212) according to the second charging control device (24).
**characterized in that**,
the charging system (30) has a first feedback state and a second feedback state, wherein
when the charging system (30) is in the first feedback state, the first switch device (13) controls the feedback receiving port (112) to be connected with the first power supply port (121) according to the first charging control device (14); and the second switch device (23) controls the second data signal port (222) to be connected with the chip data port (212) according to the second charging control device (24); and
when the charging system (30) is in the second feedback state, the first switch device (13) controls the feedback receiving port (112) to be connected with the first data signal port (122) according to the first charging control device (14); and the second switch device (23) controls the second data signal port (222) to be connected with the voltage input port (211) according to the second charging control device (24).

10. The charging system according to claim 9, wherein, each of the first data signal port (122) and the second data signal port (222) comprises a D+ port and a D- port, wherein
when the charging system (30) is in the first feedback state, the second switch device (23) controls the D+ port to be connected with the chip data port (212) according to the second charging control device (24); and
when the charging system (30) is in the second feedback state, the first switch device (13) controls the feedback receiving port (112) to be connected with the D+ port according to the first charging control device (14); and the second switch device (23) controls the D+ port to be connected with the voltage input port (211) according to the second charging control device (24);
or,
when the charging system (30) is in the first feedback state, the second switch device (23) controls the D- port to be connected with the chip data port (212) according to the second charging control device (24); and
when the charging system (30) is in the second feedback state, the first switch device (13) controls the feedback receiving port (112) to be connected with the D- port according to the first charging control device (14); and the second switch device (23) controls the D- port to be connected with the voltage input port (211) according to the second charging control device (24).

11. The charging system (30) according to claim 9, wherein,
the first charging control device (14) is configured to control the charger (10) to be in the first feedback state when a charging operation is started, and control the charger to be in the second feedback state when a duration time of the charging operation exceeds a preset time delay;
the second charging control device (24) is configured to control the charging terminal (20) to be in the first feedback state when the charging operation is started, and control the charging terminal to be in the second feedback state when the duration time of the charging operation exceeds a preset time delay; and
the preset time delays for the first charging control device (14) and the second charging control device (24) are the same.

12. The charging system according to claim 9, wherein, the first charging port (12) is a USB interface or a Micro USB interface; and the second charging port (22) is a USB interface or a Micro USB interface.

13. A control method for charging, implemented based on the charging system according to claim 9, **characterized in that**, the control method for charging comprises:
when a charging operation is started, controlling (S401) the charging system to be in the first feedback state; and when the charging system is in the first feedback state, controlling the feedback receiving port to be connected with the first power supply port according to the first charging control device by the first switch device of the charger; and controlling the second data signal port to be connected with the chip data port according to the second charging control device by the second switch device of the charging terminal;
determining (S402) whether a duration time of the charging operation exceeds a preset time delay; and
when the duration time of the charging operation exceeds the preset time delay, controlling (S403) the charging system to be in the second feedback state; and when the charging system is in the second feedback state, controlling the feedback receiving port to be connected with the first data signal port according to the first charging control device by the first switch device, and controlling the second data signal port to be connected with the voltage input port according to the second charging control device by the second switch device.

14. The control method for charging according to claim 13, wherein, each of the first and second data signal ports comprises a D+ port and a D- port, wherein
when the charging system is in the first feedback state, controlling the D+ port to be connected with the chip data port according to the second charging control device by the second switch device; and
when the charging system is in the second feedback state, controlling the feedback receiving port to be connected with the D+ port according to the first charging control device by the first switch device; and controlling the D+ port to be connected with the voltage input port according to the second charging control device by the second switch device;
or,
when the charging system is in the first feedback state, controlling the D- port to be connected with the chip data port according to the second charging control device by the second switch device; and
when the charging system is in the second feedback state, controlling the feedback receiving port to be connected with the D- port according to the first charging control device by the first switch device; and controlling the D- port to be connected with the voltage input port according to the second charging control device by the second switch device.

15. A program product having stored therein instructions that, when executed by one or more processors adapted to control a charging system according to claim 9, causes the charging system to perform:
when a charging operation is started, controlling (S401) the charging system to be in the first feedback state; and when the charging system is in the first feedback state, controlling the feedback receiving port to be connected with the first power supply port according to the first charging control device by the first switch device of the charger; and controlling the second data signal port to be connected with the chip data port according to the second charging control device by the second switch device of the charging terminal;
determining (S402) whether a duration time of the charging operation exceeds a preset time delay; and
when the duration time of the charging operation exceeds the preset time delay, controlling (S403) the charging system to be in the second feedback state; and when the charging system is in the second feedback state, controlling the feedback receiving port to be connected with the first data signal port according to the first charging control device by the first switch device, and controlling the second data signal port to be connected with the voltage input port according to the second charging control device by the second switch device.

16. A computer program, which when executing on a processor of a charging system, performs a method according to claim 13 or claim 14.

## Patentansprüche

1. Ein Ladegerät (10), wobei das Ladegerät umfasst: eine Energieversorgungsvorrichtung (11), einen ersten Ladeanschluss (12), eine erste Ladesteuerungsvorrichtung (14) und eine erste Schaltvorrichtung (13), wobei
die Energieversorgungsvorrichtung (11) eingerichtet ist, um einen Gleichstromladestrom durch Gleichrichten und Spannung-Reduzieren eines Eingangswechselstroms auszugeben; die Energieversorgungsvorrichtung zumindest einen Spannungsausgangsanschluss (111) und einen Feedback-Empfangsanschluss (112) umfasst; der Spannungsausgangsanschluss eingerichtet ist, um den Gleichstromladestrom auszugeben; und der Feedback-Empfangsanschluss eingerichtet ist, um ein Feedback-Signal zu empfangen, um den ausgegebenen Gleichstromladestrom einzustellen;
der erste Ladeanschluss (12) eingerichtet ist, um sich mit einem ladenden Endgerät (20) zu verbinden, um den ausgegebenen Gleichstromladestrom an das ladende Endgerät auszugeben; der erste Ladeanschluss zumindest einen ersten Energieversorgungsanschluss (121) und einen ersten Datensignalanschluss (122) umfasst; und der erste Energieversorgungsanschluss, der mit dem Spannungsausgangsanschluss verbunden ist, eingerichtet ist, den Gleichstromladestrom auszugeben; und
die erste Schaltvorrichtung (13), die zwischen dem Feedback-Empfangsanschluss (112) und dem ersten Ladeanschluss (12) vorgesehen ist, eingerichtet ist, um den Feedback-Empfangsanschluss zu steuern, um gemäß der ersten Ladesteuerungsvorrichtung (14) mit dem ersten Energieversorgungsanschluss (121) oder dem ersten Datensignalanschluss (122) verbunden zu sein,
**dadurch gekennzeichnet, dass**
das Ladegerät (10) einen ersten Feedback-Zustand und einen zweiten Feedback-Zustand aufweist, wobei,
wenn das Ladegerät in dem ersten Feedback-Zustand ist, die erste Schaltvorrichtung den Feedback-Empfangsanschluss steuert, um gemäß der ersten Ladesteuerungsvorrichtung mit dem ersten Energieversorgungsanschluss verbunden zu sein; und,
wenn das Ladegerät in dem zweiten Feedback-Zustand ist, die erste Schaltvorrichtung den Feedback-Empfangsanschluss steuert, um gemäß der ersten Ladesteuerungsvorrichtung mit dem ersten Datensignalanschluss verbunden zu sein.

2. Das Ladegerät nach Anspruch 1, wobei der erste Datensignalanschluss (122) einen D+ -Anschluss und einen D--Anschluss umfasst, wobei,
wenn das Ladegerät in dem zweiten Feedback-Zustand ist, die erste Schaltvorrichtung den Feedback-Empfangsanschluss steuert, um gemäß der ersten Ladesteuerungsvorrichtung mit dem D+ -Anschluss oder dem D- - Anschluss verbunden zu sein.

3. Das Ladegerät nach Anspruch 1, wobei
die erste Ladesteuerungsvorrichtung (14) eingerichtet ist, um das Ladegerät zu steuern, um in dem ersten Feedback-Zustand zu sein, wenn ein Ladebetrieb gestartet wird, und das Ladegerät zu steuern, um in dem zweiten Feedback-Zustand zu sein, wenn eine Zeitspanne des Ladebetriebs eine voreingestellte Zeitverzögerung überschreitet.

4. Das Ladegerät nach Anspruch 1, wobei der erste Ladeanschluss (12) eine Universal Serial Bus, USB, -Schnittstelle oder eine Micro-USB-Schnittstelle ist.

5. Ein ladendes Endgerät (20), das umfasst: einen Lademanagementchip (21), einen zweiten Ladeanschluss (22), eine zweite Schaltvorrichtung (23) und eine zweite Ladesteuerungsvorrichtung (24), wobei
der Lademanagementchip (21) eingerichtet ist, um einen eingegangenen Gleichstromladestrom zu empfangen, um das ladende Endgerät zu laden; der Lademanagementchip zumindest einen Spannungseingangsanschluss (211) und einen Chipdatenanschluss (212) umfasst; und der Spannungseingangsanschluss eingerichtet ist, um den Gleichstromladestrom einzugeben;
der zweite Ladeanschluss (22) eingerichtet ist, um sich mit einem Ladegerät (10) zu verbinden, um den Gleichstromladestrom zu empfangen, der von dem Ladegerät eingegangen ist; der zweite Ladeanschluss zumindest einen zweiten Energieversorgungsanschluss (221) und einen zweiten Datensignalanschluss (222) umfasst; und der zweite Energieversorgungsanschluss, der mit dem Spannungseingangsanschluss (211) verbunden ist, eingerichtet ist, den Gleichstromladestrom an den Lademanagementchip (21) auszugeben; und
die zweite Schaltvorrichtung (23), die zwischen dem Lademanagementchip (21) und dem zweiten Ladeanschluss (22) vorgesehen ist, eingerichtet ist, um den zweiten Datensignalanschluss (222) zu steuern, um gemäß der zweiten Ladesteuerungsvorrichtung (24) mit dem Spannungseingangsanschluss (211) oder dem Chipdatenanschluss (212) verbunden zu sein,
**dadurch gekennzeichnet, dass**
das ladende Endgerät (20) einen ersten Feedback-Zustand und einen zweiten Feedback-Zustand aufweist, wobei,
wenn das ladende Endgerät in dem ersten Feedback-Zustand ist, die zweite Schaltvorrichtung (23) den zweiten Datensignalanschluss (222) steuert, um gemäß der zweiten Ladesteuerungsvorrichtung (24) mit dem Chipdatenanschluss (212) verbunden zu sein; und,
wenn das ladende Endgerät in dem zweiten Feedback-Zustand ist, die zweite Schaltvorrichtung (23) den zweiten Datensignalanschluss (222) steuert, um gemäß der zweiten Ladesteuerungsvorrichtung (24) mit dem Spannungseingangsanschluss (211) verbunden zu sein.

6. Das ladende Endgerät nach Anspruch 5, wobei der zweite Datensignalanschluss (222) einen D+ -Anschluss und einen D--Anschluss umfasst, wobei,
wenn das ladende Endgerät (20) in dem ersten Feedback-Zustand ist, die zweite Schaltvorrichtung (23) den D+ -Anschluss oder den D- -Anschluss steuert, um gemäß der zweiten Ladesteuerungsvorrichtung (24) mit dem Chipdatenanschluss (212) verbunden zu sein; und,
wenn das ladende Endgerät in dem zweiten Feedback-Zustand ist, die zweite Schaltvorrichtung (23) den D+ -Anschluss oder den D- -Anschluss steuert, um gemäß der zweiten Ladesteuerungsvorrichtung (24) mit dem Spannungseingangsanschluss (211) verbunden zu sein.

7. Das ladende Endgerät nach Anspruch 5, wobei
die zweite Ladesteuerungsvorrichtung (24) eingerichtet ist, um das ladende Endgerät (20) zu steuern, um in dem ersten Feedback-Zustand zu sein, wenn ein Ladebetrieb gestartet wird, und das ladende Endgerät zu steuern, um in dem zweiten Feedback-Zustand zu sein, wenn eine Zeitspanne des Ladebetriebs eine voreingestellte Zeitverzögerung überschreitet.

8. Das ladende Endgerät nach Anspruch 5, wobei der zweite Ladeanschluss (22) eine USB-Schnittstelle oder eine Micro-USB-Schnittstelle ist.

9. Ein Ladesystem (30), das umfasst: ein Ladegerät (10) und ein ladendes Endgerät (20), wobei, wenn das Ladegerät mit dem ladenden Endgerät verbunden ist, das Ladegerät angepasst ist, um das ladende Endgerät zu laden, wobei
das Ladegerät (10) eine Energieversorgungsvorrichtung (11), einen ersten Ladeanschluss (12), eine erste Ladesteuerungsvorrichtung (14) und eine erste Schaltvorrichtung (13) umfasst,
die Energieversorgungsvorrichtung (11) eingerichtet ist, um einen Gleichstromladestrom durch Gleichrichten und Spannung-Reduzieren eines Eingangswechselstroms auszugeben; die Energieversorgungsvorrichtung zumindest einen Spannungsausgangsanschluss (111) und einen Feedback-Empfangsanschluss (112) umfasst; der Spannungsausgangsanschluss eingerichtet ist, um den Gleichstromladestrom auszugeben; und der Feedback-Empfangsanschluss eingerichtet ist, um ein Feedback-Signal zu empfangen, um den ausgegebenen Gleichstromladestrom einzustellen;
der erste Ladeanschluss (12) eingerichtet ist, um sich mit einem ladenden Endgerät (20) zu verbinden, um den ausgegebenen Gleichstromladestrom an das ladende Endgerät auszugeben; der erste Ladeanschluss zumindest einen ersten Energieversorgungsanschluss (121) und einen ersten Datensignalanschluss (122) umfasst; und der erste Energieversorgungsanschluss, der mit dem Spannungsausgangsanschluss (111) verbunden ist, eingerichtet ist, den Gleichstromladestrom auszugeben; und
die erste Schaltvorrichtung (13), die zwischen dem Feedback-Empfangsanschluss (112) und dem ersten Ladeanschluss (12) vorgesehen ist, eingerichtet ist, um den Feedback-Empfangsanschluss zu steuern, um gemäß der ersten Ladesteuerungsvorrichtung (14) mit dem ersten Energieversorgungsanschluss (121) oder dem ersten Datensignalanschluss (122) verbunden zu sein,
das ladendes Endgerät (20) umfasst: einen Lademanagementchip (21), einen zweiten Ladeanschluss (22), eine zweite Ladesteuerungsvorrichtung (23) und eine zweite Schaltvorrichtung (24);
der Lademanagementchip (21) eingerichtet ist, um einen eingegangenen Gleichstromladestrom zu empfangen, um das ladende Endgerät zu laden; der Lademanagementchip zumindest einen Spannungseingangsanschluss (211) und einen Chipdatenanschluss (212) umfasst; und der Spannungseingangsanschluss eingerichtet ist, um den Gleichstromladestrom einzugeben;
der zweite Ladeanschluss (22) eingerichtet ist, um sich mit dem Ladegerät zu verbinden, um den Gleichstromladestrom zu empfangen, der von dem Ladegerät eingegangen ist; der zweite Ladeanschluss zumindest einen zweiten Energieversorgungsanschluss (221) und einen zweiten Datensignalanschluss (222) umfasst; und der zweite Energieversorgungsanschluss, der mit dem Spannungseingangsanschluss (211) verbunden ist, eingerichtet ist, den Gleichstromladestrom an den Lademanagementchip (21) auszugeben; und
die zweite Schaltvorrichtung (23), die zwischen dem Lademanagementchip (21) und dem zweiten Ladeanschluss (22) vorgesehen ist, eingerichtet ist, um den zweiten Datensignalanschluss (222) zu steuern, um gemäß der zweiten Ladesteuerungsvorrichtung (24) mit dem Spannungseingangsanschluss (211) oder dem Chipdatenanschluss (212) verbunden zu sein,
**dadurch gekennzeichnet, dass**
das Ladesystem (30) einen ersten Feedback-Zustand und einen zweiten Feedback-Zustand aufweist, wobei,
wenn das Ladesystem (30) in dem ersten Feedback-Zustand ist, die erste Schaltvorrichtung (13) den Feedback-Empfangsanschluss (112) steuert, um gemäß der ersten Ladesteuerungsvorrichtung (14) mit dem ersten Energieversorgungsanschluss (121) verbunden zu sein; und die zweite Schaltvorrichtung (23) den zweiten Datensignalanschluss (222) steuert, um gemäß der zweiten Ladesteuerungsvorrichtung (24) mit dem Chipdatenanschluss (212) verbunden zu sein; und,
wenn das Ladesystem (30) in dem zweiten Feedback-Zustand ist, die erste Schaltvorrichtung (13) den Feedback-Empfangsanschluss (112) steuert, um gemäß der ersten Ladesteuerungsvorrichtung (14) mit dem ersten Datensignalanschluss (122) verbunden zu sein; und die zweite Schaltvorrichtung (23) den zweiten Datensignalanschluss (222) steuert, um gemäß der zweiten Ladesteuerungsvorrichtung (24) mit dem Spannungseingangsanschluss (211) verbunden zu sein.

10. Das Ladesystem nach Anspruch 9, wobei jeder von dem ersten Datensignalanschluss (122) und dem zweiten Datensignalanschluss (222) einen D+ -Anschluss und einen D- -Anschluss umfasst, wobei,
wenn das Ladesystem (30) in dem ersten Feedback-Zustand ist, die zweite Schaltvorrichtung (23) den D+ -Anschluss steuert, um gemäß der zweiten Ladesteuerungsvorrichtung (24) mit dem Chipdatenanschluss (212) verbunden zu sein; und,
wenn das Ladesystem (30) in dem zweiten Feedback-Zustand ist, die erste Schaltvorrichtung (13) den Feedback-Empfangsanschluss (112) steuert, um gemäß der ersten Ladesteuerungsvorrichtung (14) mit dem D+ -Anschluss verbunden zu sein; und die zweite Schaltvorrichtung (23) den D+ -Anschluss steuert, um gemäß der zweiten Ladesteuerungsvorrichtung (24) mit dem Spannungseingangsanschluss (211) verbunden zu sein;
oder,
wenn das Ladesystem (30) in dem ersten Feedback-Zustand ist, die zweite Schaltvorrichtung (23) den D- -Anschluss steuert, um gemäß der zweiten Ladesteuerungsvorrichtung (24) mit dem Chipdatenanschluss (212) verbunden zu sein; und,
wenn das Ladesystem (30) in dem zweiten Feedback-Zustand ist, die erste Schaltvorrichtung (13) den Feedback-Empfangsanschluss (112) steuert, um gemäß der ersten Ladesteuerungsvorrichtung (14) mit dem D- -Anschluss verbunden zu sein; und die zweite Schaltvorrichtung (23) den D- -Anschluss steuert, um gemäß der zweiten Ladesteuerungsvorrichtung (24) mit dem Spannungseingangsanschluss (211) verbunden zu sein.

11. Das Ladesystem (30) nach Anspruch 9, wobei
die erste Ladesteuerungsvorrichtung (14) eingerichtet ist, um das Ladegerät (10) zu steuern, um in dem ersten Feedback-Zustand zu sein, wenn ein Ladebetrieb gestartet wird, und das Ladegerät zu steuern, um in dem zweiten Feedback-Zustand zu sein, wenn eine Zeitspanne des Ladebetriebs eine voreingestellte Zeitverzögerung überschreitet;
die zweite Ladesteuerungsvorrichtung (24) eingerichtet ist, um das ladende Endgerät (20) zu steuern, um in dem ersten Feedback-Zustand zu sein, wenn der Ladebetrieb gestartet wird, und das ladende Endgerät zu steuern, um in dem zweiten Feedback-Zustand zu sein, wenn die Zeitspanne des Ladebetriebs eine voreingestellte Zeitverzögerung überschreitet; und
die voreingestellten Zeitverzögerungen für die erste Ladesteuerungsvorrichtung (14) und die zweite Ladesteuerungsvorrichtung (24) gleich sind.

12. Das Ladesystem nach Anspruch 9, wobei der erste Ladeanschluss (12) eine USB-Schnittstelle oder eine Micro-USB-Schnittstelle ist; und der zweite Ladeanschluss (22) eine USB-Schnittstelle oder eine Micro-USB-Schnittstelle ist.

13. Ein Steuerungsverfahren zum Laden, das basierend auf dem Ladesystem nach Anspruch 9 ausgeführt ist, wobei das Steuerungsverfahren zum Laden umfasst:
wenn ein Ladebetrieb startet, Steuern (S401) des Ladesystems, um in dem ersten Feedback-Zustand zu sein; und wenn das Ladesystem in dem ersten Feedback-Zustand ist, Steuern des Feedback-Empfangsanschlusses durch die erste Schaltvorrichtung des Ladegerätes, um gemäß der ersten Ladesteuerungsvorrichtung mit dem ersten Energieversorgungsanschluss verbunden zu sein; und Steuern des zweiten Datensignalanschlusses durch die zweite Schaltvorrichtung des ladenden Endgerätes, um gemäß der zweiten Ladesteuerungsvorrichtung mit dem Chipdatenanschluss verbunden zu sein;
Bestimmen (S402), ob eine Zeitspanne des Ladebetriebs eine voreingestellte Zeitverzögerung überschreitet; und,
wenn die Zeitspanne des Ladebetriebs die voreingestellte Zeitverzögerung überschreitet, Steuern (S403) des Ladesystems, um in dem zweiten Feedback-Zustand zu sein; und wenn das Ladesystem in dem zweiten Feedback-Zustand ist, Steuern des Feedback-Empfangsanschlusses durch die erste Schaltvorrichtung, um gemäß der ersten Ladesteuerungsvorrichtung mit dem ersten Datensignalanschluss verbunden zu sein; und Steuern des zweiten Datensignalanschlusses durch die zweite Schaltvorrichtung, um gemäß der zweiten Ladesteuerungsvorrichtung mit dem Spannungseingangsanschluss verbunden zu sein.

14. Das Steuerungsverfahren zum Laden nach Anspruch 13, wobei jeder von den ersten und zweiten Datensignalanschlüssen einen D+ -Anschluss und einen D- -Anschluss umfasst, wobei,
wenn das Ladesystem in dem ersten Feedback-Zustand ist, Steuern des D+ -Anschlusses durch die zweite Schaltvorrichtung, um gemäß der zweiten Ladesteuerungsvorrichtung mit dem Chipdatenanschluss verbunden zu sein; und,
wenn das Ladesystem in dem zweiten Feedback-Zustand ist, Steuern des Feedback-Empfangsanschlusses durch die erste Schaltvorrichtung, um gemäß der ersten Ladesteuerungsvorrichtung mit dem D+ -Anschluss verbunden zu sein; und Steuern des D+ -Anschlusses durch die zweite Schaltvorrichtung, um gemäß der zweiten Ladesteuerungsvorrichtung mit dem Spannungseingangsanschluss verbunden zu sein;
oder,
wenn das Ladesystem in dem ersten Feedback-Zustand ist, Steuern des D--Anschlusses durch die zweite Schaltvorrichtung, um gemäß der zweiten Ladesteuerungsvorrichtung mit dem Chipdatenanschluss verbunden zu sein; und,
wenn das Ladesystem in dem zweiten Feedback-Zustand ist, Steuern des Feedback-Empfangsanschlusses durch die erste Schaltvorrichtung, um gemäß der ersten Ladesteuerungsvorrichtung mit dem D- -Anschluss verbunden zu sein; und Steuern des D- -Anschlusses durch die zweite Schaltvorrichtung, um gemäß der zweiten Ladesteuerungsvorrichtung mit dem Spannungseingangsanschluss verbunden zu sein.

15. Ein Programmprodukt mit darin gespeicherten Befehlen, die, wenn sie durch einen oder mehrere Prozessoren, die angepasst sind, um ein Ladesystem nach Anspruch 9 zu steuern, ausgeführt werden, das Ladesystem veranlassen auszuführen:
wenn ein Ladebetrieb gestartet wird, Steuern (S401) des Ladesystems, um in dem ersten Feedback-Zustand zu sein; und wenn das Ladesystem in dem ersten Feedback-Zustand ist, Steuern des Feedback-Empfangsanschlusses durch die erste Schaltvorrichtung des Ladegerätes, um gemäß der ersten Ladesteuerungsvorrichtung mit dem ersten Energieversorgungsanschluss verbunden zu sein; und Steuern des zweiten Datensignalanschlusses durch die zweite Schaltvorrichtung des ladenden Endgerätes, um gemäß der zweiten Ladesteuerungsvorrichtung mit dem Chipdatenanschluss verbunden zu sein;
Bestimmen (S402), ob eine Zeitspanne des Ladebetriebs eine voreingestellte Zeitverzögerung überschreitet; und,
wenn die Zeitspanne des Ladebetriebs die voreingestellte Zeitverzögerung überschreitet, Steuern (S403) des Ladesystems, um in dem zweiten Feedback-Zustand zu sein; und wenn das Ladesystem in dem zweiten Feedback-Zustand ist, Steuern des Feedback-Empfangsanschlusses durch die erste Schaltvorrichtung, um gemäß der ersten Ladesteuerungsvorrichtung mit dem ersten Datensignalanschluss verbunden zu sein; und Steuern des zweiten Datensignalanschlusses durch die zweite Schaltvorrichtung, um gemäß der zweiten Ladesteuerungsvorrichtung mit dem Spannungseingangsanschluss verbunden zu sein.

16. Ein Computerprogramm, das, wenn es auf einem Prozessor eines Ladesystems ausgeführt wird, ein Verfahren nach Anspruch 13 oder Anspruch 14 ausführt.

## Revendications

1. Chargeur (10), le chargeur comprenant: un dispositif d'alimentation (11), un premier port de charge (12), un premier dispositif de commande de charge (14) et un premier dispositif de commutation (13), dans lequel
le dispositif d'alimentation (11) est configuré pour délivrer un courant de charge continu en redressant et réduisant la tension d'un courant de charge alternatif d'entrée ; le dispositif d'alimentation comprend au moins un port de sortie de tension (111) et un port de réception de rétroaction (112) ; le port de sortie de tension est configuré pour délivrer le courant de charge continu ; et le port de réception de rétroaction est configuré pour recevoir un signal de rétroaction pour ajuster le courant de charge continu de sortie ;
le premier port de charge (12) est configuré pour être connecté à un terminal de charge (20), pour délivrer le courant de charge continu de sortie au terminal de charge ; le premier port de charge comprend au moins un premier port d'alimentation (121) et un premier port de signal de données (122) ; et le premier port d'alimentation, qui est connecté au port de sortie de tension, est configuré pour délivrer le courant de charge continu ; et
le premier dispositif de commutation (13), qui est prévu entre le port de réception de rétroaction (112) et le premier port de charge (12), est configuré pour commander le port de réception de rétroaction pour qu'il soit connecté au premier port d'alimentation (121) ou au premier port de signal de données (122) selon le premier dispositif de commande de charge (14),
**caractérisé en ce que**,
le chargeur (10) a un premier état de rétroaction et un deuxième état de rétroaction, dans lequel
lorsque le chargeur est dans le premier état de rétroaction, le premier dispositif de commutation commande le port de réception de rétroaction pour qu'il soit connecté au premier port d'alimentation selon le premier dispositif de commande de charge ; et
lorsque le chargeur est dans le deuxième état de rétroaction, le premier dispositif de commutation commande le port de réception de rétroaction pour qu'il soit connecté au premier port de signal de données selon le premier dispositif de commande de charge.

2. Chargeur selon la revendication 1, dans lequel le premier port de signal de données (122) comprend un port D+ et un port D-, dans lequel
lorsque le chargeur est dans le deuxième état de rétroaction, le premier dispositif de commutation commande le port de réception de rétroaction pour qu'il soit connecté au port D+ ou au port D- selon le premier dispositif de commande de charge.

3. Chargeur selon la revendication 1, dans lequel
le premier dispositif de commande de charge (14) est configuré pour commander le chargeur pour qu'il soit dans le premier état de rétroaction lorsqu'une opération de charge a débuté, et pour commander le chargeur pour qu'il soit dans le deuxième état de rétroaction lorsqu'une durée de l'opération de charge dépasse un temps retard prédéterminé.

4. Chargeur selon la revendication 1, dans lequel le premier port de charge (12) est une interface de bus série universel, USB, ou une interface micro USB.

5. Terminal de charge (20), comprenant : une puce de gestion de charge (21), un deuxième port de charge (22), un deuxième dispositif de commutation (23) et un deuxième dispositif de commande de charge (24), dans lequel
la puce de gestion de charge (21) est configurée pour recevoir un courant de charge continu d'entrée pour charger le terminal de charge ; la puce de gestion de charge comprend au moins un port d'entrée de tension (211) et un port de données de puce (212) ; et le port d'entrée de tension est configuré pour entrer le courant de charge continu ;
le deuxième port de charge (22) est configuré pour être connecté à un chargeur (10) pour recevoir le courant de charge continu qui est reçu du chargeur ; le deuxième port de charge comprend au moins un deuxième port d'alimentation (221) et un deuxième port de signal de données (222) ; et le deuxième port d'alimentation, qui est connecté au port d'entrée de tension (211), est configuré pour délivrer le courant de charge continu à la puce de gestion de charge (21) ; et
le deuxième dispositif de commutation (23), qui est prévu entre la puce de gestion de charge (21) et le deuxième port de charge (22), est configuré pour commander le deuxième port de signal de données (222) pour qu'il soit connecté au port d'entrée de tension (211) ou au port de données de puce (212) selon le deuxième dispositif de commande de charge (24),
**caractérisé en ce que**
le terminal de charge (20) a un premier état de rétroaction et un deuxième état de rétroaction, dans lequel
lorsque le terminal de charge est dans le premier état de rétroaction, le deuxième dispositif de commutation (23) commande le deuxième port de signal de données (222) pour qu'il soit connecté au port de données de puce (212) selon le deuxième dispositif de commande de charge (24) ; et
lorsque le terminal de charge est dans le deuxième état de rétroaction, le deuxième dispositif de commutation (23) commande le deuxième port de signal de données (222) pour qu'il soit connecté au port d'entrée de tension (211) selon le deuxième dispositif de commande de charge (24).

6. Terminal de charge selon la revendication 5, dans lequel le deuxième port de signal de données (222) comprend un port D+ et un port D-, dans lequel
lorsque le terminal de charge (20) est dans le premier état de rétroaction, le deuxième dispositif de commutation (23) commande le port D+ ou le port D- pour qu'il soit connecté au port de données de puce (212) selon le deuxième dispositif de commande de charge (24) ; et
lorsque le terminal de charge est dans le deuxième état de rétroaction, le deuxième dispositif de commutation (23) commande le port D+ ou le port D- pour qu'il soit connecté au port d'entrée de tension (211) selon le deuxième dispositif de commande de charge (24).

7. Terminal de charge selon la revendication 5, dans lequel
le deuxième dispositif de commande de charge (24) est configuré pour commander le terminal de charge (20) pour qu'il soit dans le premier état de rétroaction lorsqu'une opération de charge a débuté, et pour commander le terminal de charge pour qu'il soit dans le deuxième état de rétroaction lorsqu'une durée de l'opération de charge dépasse un temps retard prédéterminé.

8. Terminal de charge selon la revendication 5, dans lequel le deuxième port de charge (22) est une interface USB ou une interface micro USB.

9. Système de charge (30), comprenant : un chargeur (10) et un terminal de charge (20), dans lequel, lorsque le chargeur est connecté au terminal de charge, le chargeur est conçu pour charger le terminal de charge, dans lequel
le chargeur (10) comprend un dispositif d'alimentation (11), un premier port de charge (12), un premier dispositif de commande de charge (14) et un premier dispositif de commutation (13) ;
le dispositif d'alimentation (11) est configuré pour délivrer un courant de charge continu en redressant et réduisant la tension d'un courant de charge alternatif d'entrée ; le dispositif d'alimentation comprend au moins un port de sortie de tension (111) et un port de réception de rétroaction (112) ; le port de sortie de tension est configuré pour délivrer le courant de charge continu ; et le port de réception de rétroaction est configuré pour recevoir un signal de rétroaction pour ajuster le courant de charge continu de sortie ;
le premier port de charge (12) est configuré pour être connecté au terminal de charge (20), pour délivrer le courant de charge continu de sortie au terminal de charge ; le premier port de charge comprend au moins un premier port d'alimentation (121) et un premier port de signal de données (122) ; et le premier port d'alimentation, qui est connecté au port de sortie de tension (111), est configuré pour délivrer le courant de charge continu ;
le premier dispositif de commutation (13), qui est prévu entre le port de réception de rétroaction (112) et le premier port de charge (12), est configuré pour commander le port de réception de rétroaction pour qu'il soit connecté au premier port d'alimentation (121) ou au premier port de signal de données (122) selon le premier dispositif de commande de charge (14) ;
le terminal de charge (20) comprend : une puce de gestion de charge (21), un deuxième port de charge (22), un deuxième dispositif de commande de charge (23) et un deuxième dispositif de commutation (24) ;
la puce de gestion de charge (21) est configurée pour recevoir le courant de charge continu d'entrée pour charger le terminal de charge ; la puce de gestion de charge comprend au moins un port d'entrée de tension (211) et un port de données de puce (212) ; et le port d'entrée de tension est configuré pour recevoir le courant de charge continu ;
le deuxième port de charge (22) est configuré pour être connecté au chargeur pour recevoir le courant de charge continu qui est reçu du chargeur ; le deuxième port de charge comprend au moins un deuxième port d'alimentation (221) et un deuxième port de signal de données (222) ; et le deuxième port d'alimentation, qui est connecté au port d'entrée de tension (211), est configuré pour délivrer le courant de charge continu à la puce de gestion de charge (21) ; et
le deuxième dispositif de commutation (23), qui est prévu entre la puce de gestion de charge (21) et le deuxième port de charge (22), est configuré pour commander le deuxième port de signal de données (222) pour qu'il soit connecté au port d'entrée de tension (211) ou au port de données de puce (212) selon le deuxième dispositif de commande de charge (24),
**caractérisé en ce que**
le système de charge (30) a un premier état de rétroaction et un deuxième état de rétroaction, dans lequel
lorsque le système de charge (30) est dans le premier état de rétroaction, le premier dispositif de commutation (13) commande le port de réception de rétroaction (112) pour qu'il soit connecté au premier port d'alimentation (121) selon le premier dispositif de commande de charge (14) ; et le deuxième dispositif de commutation (23) commande le deuxième port de signal de données (222) pour qu'il soit connecté au port de données de puce (212) selon le deuxième dispositif de commande de charge (24) ; et
lorsque le système de charge (30) est dans le deuxième état de rétroaction, le premier dispositif de commutation (13) commande le port de réception de rétroaction (112) pour qu'il soit connecté au premier port de signal de données (122) selon le premier dispositif de commande de charge (14); et le deuxième dispositif de commutation (23) commande le deuxième port de signal de données (222) pour qu'il soit connecté au port d'entrée de tension (211) selon le deuxième dispositif de commande de charge (24).

10. Système de charge selon la revendication 9, dans lequel chacun du premier port de signal de données (122) et du deuxième port de signal de données (222) comprend un port D+ et un port D-, dans lequel
lorsque le système de charge (30) est dans le premier état de rétroaction, le deuxième dispositif de commutation (23) commande le port D+ pour qu'il soit connecté au port de données de puce (212) selon le deuxième dispositif de commande de charge (24) ; et
lorsque le système de charge (30) est dans le deuxième état de rétroaction, le premier dispositif de commutation (13) commande le port de réception de rétroaction (112) pour qu'il soit connecté au port D+ selon le premier dispositif de commande de charge (14) ; et le deuxième dispositif de commutation (23) commande le port D+ pour qu'il soit connecté au port d'entrée de tension (211) selon le deuxième dispositif de commande de charge (24) ; ou
lorsque le système de charge (30) est dans le premier état de rétroaction, le deuxième dispositif de commutation (23) commande le port D-pour qu'il soit connecté au port de données de puce (212) selon le deuxième dispositif de commande de charge (24) ; et
lorsque le système de charge (30) est dans le deuxième état de rétroaction, le premier dispositif de commutation (13) commande le port de réception de rétroaction (112) pour qu'il soit connecté au port D- selon le premier dispositif de commande de charge (14) ; et le deuxième dispositif de commutation (23) commande le port D- pour qu'il soit connecté au port d'entrée de tension (211) selon le deuxième dispositif de commande de charge (24).

11. Système de charge (30) selon la revendication 9, dans lequel
le premier dispositif de commande de charge (14) est configuré pour commander le chargeur (10) pour qu'il soit dans le premier état de rétroaction lorsqu'une opération de charge a débuté, et pour commander le chargeur pour qu'il soit dans le deuxième état de rétroaction lorsqu'une durée de l'opération de charge dépasse un temps retard prédéterminé ;
le deuxième dispositif de commande de charge (24) est configuré pour commander le terminal de charge (20) pour qu'il soit dans le premier état de rétroaction lorsque l'opération de charge a débuté, et pour commander le terminal de charge pour qu'il soit dans le deuxième état de rétroaction lorsque la durée de l'opération de charge dépasse un temps retard prédéterminé ; et
les temps de retard prédéterminés pour le premier dispositif de commande de charge (14) et le deuxième dispositif de commande de charge (24) sont identiques.

12. Système de charge selon la revendication 9, dans lequel le premier port de charge (12) est une interface USB ou une interface micro USB ; et le deuxième port de charge (22) est une interface USB ou une interface micro USB.

13. Procédé de commande de charge, mis en oeuvre sur la base du système de charge selon la revendication 9, **caractérisé en ce que** le procédé de commande de charge comprend :
lorsqu'une opération de charge a débuté, la commande (S401) du système de charge pour qu'il soit dans le premier état de rétroaction ; et lorsque le système de charge est dans le premier état de rétroaction, la commande du port de réception de rétroaction pour qu'il soit connecté au premier port d'alimentation selon le premier dispositif de commande de charge par le premier dispositif de commutation du chargeur ; et la commande du deuxième port de signal de données pour qu'il soit connecté au port de données de puce selon le deuxième dispositif de commande de charge par le deuxième dispositif de commutation du terminal de charge ;
la détermination (S402) si une durée de l'opération de charge dépasse un temps de retard prédéterminé ; et
lorsque la durée de l'opération de charge dépasse le temps de retard prédéterminé, la commande (S403) du système de charge pour qu'il soit dans le deuxième état de rétroaction ; et lorsque le système de charge est dans le deuxième état de rétroaction, la commande du port de réception de rétroaction pour qu'il soit connecté au premier port de signal de données selon le premier dispositif de commande de charge par le premier dispositif de commutation, et la commande du deuxième port de signal de données pour qu'il soit connecté au port d'entrée de tension selon le deuxième dispositif de commande de charge par le deuxième dispositif de commutation.

14. Procédé de commande de charge selon la revendication 13, dans lequel chacun des premier et deuxième ports de signal de données comprend un port D+ et un port D-, dans lequel
lorsque le système de charge est dans le premier état de rétroaction, le port D+ est commandé pour qu'il soit connecté au port de données de puce selon le deuxième dispositif de commande de charge par le deuxième dispositif de commutation ; et
lorsque le système de charge est dans le deuxième état de rétroaction, le port de réception de rétroaction est commandé pour qu'il soit connecté au port D+ selon le premier dispositif de commande de charge par le premier dispositif de commutation ; et le port D+ est commandé pour qu'il soit connecté au port d'entrée de tension selon le deuxième dispositif de commande de charge par le deuxième dispositif de commutation ; ou
lorsque le système de charge est dans le premier état de rétroaction, le port D- est commandé pour qu'il soit connecté au port de données de puce selon le deuxième dispositif de commande de charge par le deuxième dispositif de commutation ; et
lorsque le système de charge est dans le deuxième état de rétroaction, le port de réception de rétroaction est commandé pour qu'il soit connecté au port D- selon le premier dispositif de commande de charge par le premier dispositif de commutation ; et le port D- est commandé pour qu'il soit connecté au port d'entrée de tension selon le deuxième dispositif de commande de charge par le deuxième dispositif de commutation.

15. Produit-programme dans lequel des instructions sont mémorisées, qui, lorsqu'il est exécuté par un ou plusieurs processeurs conçus pour commander le système de charge selon la revendication 9, amène le système de charge à effectuer :
lorsqu'une opération de charge a débuté, la commande (S401) du système de charge pour qu'il soit dans le premier état de rétroaction ; et lorsque le système de charge est dans le premier état de rétroaction, la commande du port de réception de rétroaction pour qu'il soit connecté au premier port d'alimentation selon le premier dispositif de commande de charge par le premier dispositif de commutation du chargeur ; et la commande du deuxième port de signal de données pour qu'il soit connecté au port de données de puce selon le deuxième dispositif de commande de charge par le deuxième dispositif de commutation du terminal de charge ;
la détermination (S402) si une durée de l'opération de charge dépasse un temps de retard prédéterminé ; et
lorsque la durée de l'opération de charge dépasse le temps de retard prédéterminé, la commande (S403) du système de charge pour qu'il soit dans le deuxième état de rétroaction ; et lorsque le système de charge est dans le deuxième état de rétroaction, la commande du port de réception de rétroaction pour qu'il soit connecté au premier port de signal de données selon le premier dispositif de commande de charge par le premier dispositif de commutation, et la commande du deuxième port de signal de données pour qu'il soit connecté au port d'entrée de tension selon le deuxième dispositif de commande de charge par le deuxième dispositif de commutation.

16. Programme d'ordinateur qui, lorsqu'il est exécuté sur un processeur d'un système de charge, effectue un procédé selon la revendication 13 ou la revendication 14.
